Europäisches Patentamt

European Patent Office

Office européen des brevets

(11) Publication number: **0 145 458**
**B1**

(12) EUROPEAN PATENT SPECIFICATION

(45) Date of publication of patent specification: **18.07.90**

(21) Application number: **84308491.4**

(22) Date of filing: **06.12.84**

(51) Int. Cl.⁵: **B 29 C 31/10,** B 29 C 39/12 // B29K83:00, B29K105:24

(54) **Method for molding multicolored silicone rubber articles.**

(30) Priority: **09.12.83 JP 231468/83**

(43) Date of publication of application:
**19.06.85 Bulletin 85/25**

(45) Publication of the grant of the patent:
**18.07.90 Bulletin 90/29**

(84) Designated Contracting States:
**BE DE FR GB IT NL**

(56) References cited:
**DE-A-3 218 404**
**FR-A-2 090 169**
**FR-A-2 376 732**
**JP-A-58 176 731**
**US-A-3 681 723**

**PATENTS ABSTRACTS OF JAPAN, vol. 7, no.
126 (M-219)1271r, 31st May 1983; & JP-A-58 44
997 (AKIRA HIRAI) 16-03-1983**

(73) Proprietor: **Toray Silicone Company Limited
Mitsui Building No. 6 2-8 Nihonbashi-
Muromachi
Chuo-ku Tokyo 103 (JP)**

(72) Inventor: **Shimizu, Koji
4-25-14 Aobadai
Ichihara-shi Chiba-ken (JP)**
Inventor: **Hamada, Mitsuo
3-5-17 Okubo
Kisawaza-shi Chiba-ken (JP)**

(74) Representative: **Laredo, Jack Joseph et al
Elkington and Fife Beacon House 113 Kingsway
London, WC2B 6PP (GB)**

Courier Press, Leamington Spa, England.

## Description

The present invention relates to a method for molding a multicolored silicone rubber article using a single molding operation.

Generally, the key tops for calculators or computer keyboards are colored according to the function of the keystroke. In accordance with prior art teaching, molding of color-classified key tops from silicone rubber compounds is accomplished by separately milling a number of different colored paste-type silicone rubber compositions together with a curing catalyst to obtain a homogeneous composition, manually filling each of these compositions into the mold cavities of the lower section of metal mold, assembling the upper and lower mold sections and heating the mold to cure the contents.

The shortcoming of this manufacturing method is that it not only requires time to mill the curing catalyst uniformly into the composition, but also requires a relatively long time to manually fill each mold cavity. Moreover, if each mold cavity is not filled with extreme care, the reject rate may be greatly increased, resulting in reduced productivity. Also, manually filling mold cavities with differently colored compositions is prone to error.

It is known to prepare multicolored molded articles by simultaneously introducing two or more different colored molten thermoplastic organic polymer compositions into adjoining sections of a mold cavity and subsequently cooling the compositions to yield a unitary article. One disadvantage of such a method is the high probability of adhesive failure at the interfaces between the variously colored sections of the article.

The goal of the present invention is to provide a rapid method for manufacturing unitary, multicolored silicone rubber moldings such as key tops, while simultaneously reducing the reject rate and improving productivity relative to prior art methods.

Unitary, molded silicone rubber articles comprising a plurality of differently colored objects joined together by a silicone rubber layer are prepared by filling a plurality of cavities simultaneously in the lower section of a disassembled metal mold with differently colored, pumpable, heat curable silicone rubber compositions. The filling is accomplished using an injector containing a separate compartment for each colored composition, said compartment having a plurality of outlet nozzles. The mold is then assembled and heated to cure the composition. The assembled mold contains a common chamber connecting together all of the mold cavities. The chamber is filled with at least one of said silicone rubber compositions. In the cured form the contents of the chamber provide the silicone rubber layer that unites all of the molded objects to form said unitary article.

This invention provides a method for manufacturing silicone rubber articles consisting essentially of a plurality of differently colored molded objects joined by a silicone rubber layer to form a unitary article, said method comprising the following sequence of steps: filling a plurality of mold cavities simultaneously in the lower section of an open metal mold with a plurality of differently colored pumpable silicone rubber compositions supplied by an injector, where each mold cavity is filled with a single composition, said mold when assembled contains a connecting clearance above said mold cavities that provides access to all of said cavities, and where the amount of said compositions is sufficient to fill each of said mold cavities and said connecting clearance following assembly of the mold; assembling the upper and lower sections of said mold and heating the silicone rubber compositions sufficiently to produce a unitary, cured silicone rubber article; and disassembling the mold and removing said cured article therefrom.

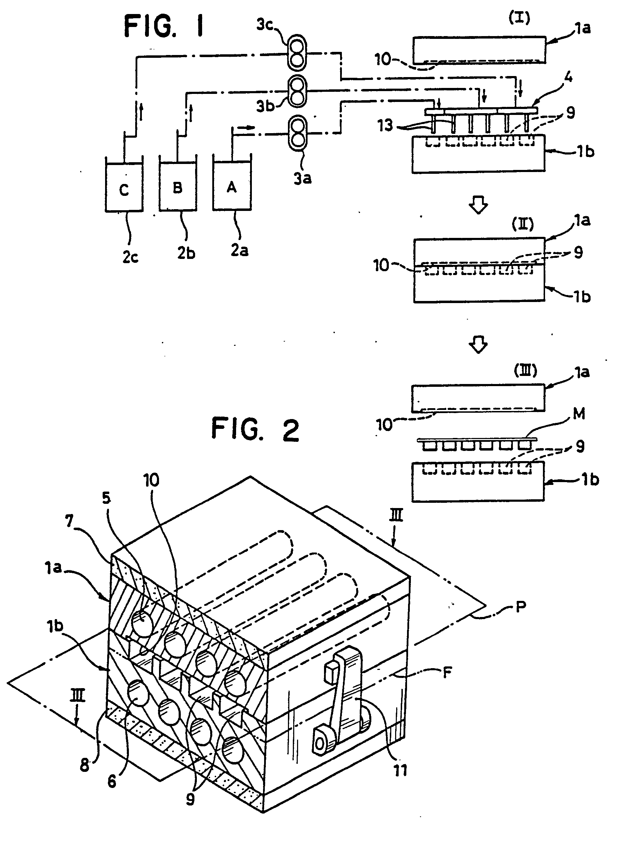

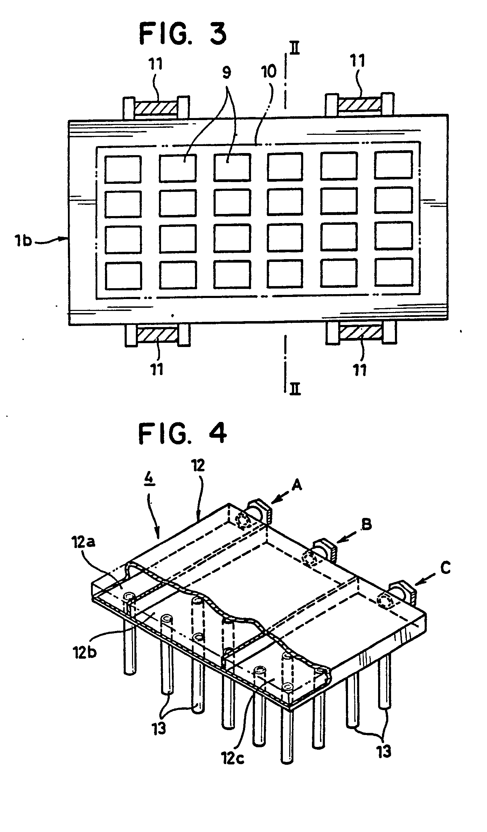

Figure 1 illustrates the manufacturing method of the present invention. Figure 2 is a cross section, taken along line II—II of Figure 3, of a prospective view of a typical mold useful in connection with the present method. Figure 3 is a top view of Figure 2 along imaginary surface P from the direction indicated by arrow III. Figure 4 is a partially cut-away prospective view of the injector used in the present invention.

The individual moldings that together constitute the unitary articles formed in accordance with the present method are formed using two or more differently colored versions of the same silicone rubber composition. Each molding can be formed from a single color or a mixture of two or more differently colored compositions.

The pumpable silicone rubber composition used to prepare the articles of the invention is a liquid at room temperature and is composed of a liquid, curable polyorganosiloxane, a filler, a crosslinking agent, and optionally, a curing catalyst as principal components. The composition cures to a rubber at room temperature or by heating. During injection into the mold cavities of the mold, the viscosity of the composition is preferably from 0.05 to 30 Pa · s, measured using a BH-type rotary viscometer equipped with a number 7 spindle.

Curing of the silicone rubber composition can occur by means of an addition reaction, a condensation reaction, or a reaction catalyzed by an organic peroxide. From the viewpoints of curing rate and uniformity of curing, an addition reaction type of curing or a curing catalyzed by an organoperoxide is preferred. Color is imparted to the liquid silicone rubber composition by addition of a filler, a pigment or a combination of filler and pigment.

Two or more liquid silicone rubber compositions are fed into the mold cavities in the metal mold by means of an injector. This injector distributes the compositions to all mold cavities simultaneously and is internally divided into one chamber for each color. Output nozzles corresponding to the location of each mold cavity are located in the floor of the chambers. The liquid silicone composition is temporarily stored in these chambers and metered into the mold cavities through the output nozzles. Transfer of the liquid silicone rubber composition into the injector can be accomplished by gravity with the aid of a hydraulically or pneumatically activated piston or by utilizing pumps such as gear pumps.

The metal molds are divided at least into a top and bottom section and the required number of mold cavities are present in the lower metal mold section. The metal mold can be disassembled into two or more sections as necessary. The mold cavities in the assembled metal mold are connected together by a connecting clearance located along the plane defined by the parting surface of the assembled mold. The quantity of liquid silicone rubber injected into each mold cavity can be equalized by means of this connecting clearance. This connecting clearance may be present as a depression in either upper or lower mold section or in both sections. When present in the upper metal mold section, the upper surface of the depression is preferably planar.

Separation and/or assembly of the metal mold can be preformed manually in small scale production, while mechanical operations are preferred in large-scale production.

A practical application of the present invention is explained below with the aid of figures.

Figure 1 (I), (II) and (III) shows a process during which differently colored key tops are molded from a liquid silicone rubber compostiion. 1a and 1b are the upper and lower sections of the divided metal mold. 2a, 2b and 2c are containers in which differently colored liquid silicone rubber compositions A, B and C are stored. 3a, 3b and 3c are gear pumps which supply injector 4 with silicone rubber compositions A, B and C from containers 2a, 2b and 2c.

The structure of the divided metal mold composed of upper metal mold section 1a and lower metal mold section 1b is shown in Figures 2 and 3. Both metal mold sections have several holes 5 and 6 for the insertion of cartridge heaters. A layer of thermal insulation material 7 and 8, such as asbestos, is applied to the top and bottom surfaces. Several mold cavities 9 are formed in the upper region of the lower metal mold section 1b. A shallow, flat depression is formed in the parting surface of upper metal mold section 1a assembled with lower metal mold section 1b. The depression 10 in upper metal mold section 1a assembled with lower metal mold section 1b. The depression 10 in upper metal mold section 1a corresponds with area occupied by the open ends of the several mold cavities 9 in the lower metal mold section 1b, and thus forms a connecting clearance or chamber connecting these mold cavities 9 when the mold is assembled. A similar depression can be located in the lower metal mold section 1b along with the mold cavities 9 or both the upper and lower metal mold sections 1a and 1b may contain depressions similar to 10.

Lower metal mold section 1b can be further divided along imaginary surface F which intersects the bottom surfaces of mold cavities 9 and divides the metal mold into 3 sections. Upper and lower metal mold sections 1a and 1b are held tightly in place by hook 11. However, because the weight of the metal mold itself also contributes to a tight assembly, hook 11 is not always necessary.

The injection 4 comprises a main case 12 which is divided into 3 chambers, 12a, 12b and 12c, for storing three differently colored liquid silicone rubber compositions, A, B and C. Several output nozzles 13 are installed facing downward along the bottom surfaces of chambers 12a, 12b and 12c. Each output nozzle 13 is located above a mold cavity 9 into which the liquid silicone rubber composition is to be dispensed.

When multicolored key tops are molded, the upper and lower metal mold sections 1a, 1b are first separated as shown in Figure 1, exposing the upper ends of the mold cavities. One output nozzle 13 is located above each mold cavity 9. Gear pumps 3a, 3b and 3c are then operated, transferring liquid silicone rubber compositions A, B and C from containers 2a, 2b and 2c into chambers 12a, 12b and 12c of injector 4 and simultaneously distributing the compositions to each mold cavity 9 through output nozzles 13. At least a portion of the cavities are filled above the plane defined by the upper surface of the lower mold section.

After compositions A, B and C have been simultaneously fed into mold cavities 9, upper and lower metal mold sections 1a and 1b are tightly pressed together as shown in process II. At the moment when upper metal mold section 1a presses against lower metal mold section 1b, part of the liquid silicone rubber composition filled into mold cavities 9 escapes into the connecting clearance defined by depression 10, thereby equalizing the quantities of composition present in adjacent mold cavities. Preferably a sufficient amount of composition is present to completely fill the space defined by the connecting clearance. The cartridge heaters inserted in insertion holes 5 and 6 then heat and cure the liquid silicone rubber composition.

Upon completion of curing, the upper and lower metal mold sections 1a and 1b are separated as shown in Figure 1 (III) to release molding M. Molding M consists of a single molding of several key tops molded in mold cavities 9 connected by a layer of silicone rubber formed in the connecting clearance formed by depression 10.

The above example discloses the molding of key tops. By changing the shape of the mold cavities of the metal mold, the present method can be applied to fabricating other multicolored silicone rubber moldings.

As mentioned above, due to the high flowability of the starting silicone rubber composition in the present invention's method for manufacturing multicolor silicone rubber moldings, the time consuming roll kneading operation, of the prior art is no longer necessary since the mold cavities can be rapidly filled. The high flowability also makes possible the molding of complicated shapes as well as high precision molding and reduces the reject rate. Moreover, because the mold cavities are filled by an injector device, simultaneous filling of multiple mold cavities is possible. The inefficiency resulting from filling a pasty silicone rubber composition into one mold cavity at a time is eliminated.

Furthermore, by connecting each mold cavity at the metal mold parting surface by means of a connecting clearance, the amounts of liquid silicone rubber composition in each mold cavity can be equalized. Since the mold cavities are fed by the output nozzle of an injector, a better quantitative control is exercised. Accordingly, the molding reject rate, particularly for small parts molding, can be significantly reduced.

## Claims

1. A method for manufacturing silicone rubber articles consisting essentially of a plurality of differently colored molded objects joined by a silicone rubber layer to form a unitary article, said method being characterised by sequentially

(i) filling a plurality of mold cavities simultaneously in the lower section of an open metal mold with a plurality of differently colored pumpable silicone rubber compositions supplied by an injector, where each mold cavity is filled with a single composition, said mold when assembled contains a connecting clearance above said mold cavities that provides access to all of said cavities, and where the amount of said compositions is sufficient to fill each of said mold cavities and said connecting clearance following assembly of the mold;

(ii) assembling the upper and lower sections of said mold and heating the silicone rubber compositions sufficiently to produce a unitary, cured silicone rubber article; and

(iii) disassembling the mold and removing said cured article therefrom.

2. A method according to claim 1 where the interior portion of said injector contains separate chambers for each color of liquid silicone rubber composition and each chamber is in communication with a plurality of outlet nozzles corresponding to at least a portion of the total number of said mold cavities.

3. A method according to claim 1 where said liquid silicone rubber compositions are cured using an addition reaction or one catalyzed by an organoperoxide.

## Patentansprüche

1. Verfahren zum Herstellen von Gegenständen aus Siliconkautschuk bestehend im wesentlichen aus einer Vielzahl von unterschiedlich gefärbten, geformten Gegenständen, die durch eine Schicht aus Siliconkautschuk miteinander unter Ausbildung eines einheitlichen Gegenstandes verbunden sind, wobei das Verfahren gekennzeichnet ist durch die Schrittfolge

(i) gleichzeitiges Füllen einer Vielzahl von Formhohlräumen im unteren Teil einer offenen Metallform mit einer Vielzahl von unterschiedlich gefärbten, pumpbaren Siliconkautschukzusammensetzungen, die durch eine Düse zugeführt werden, wobei jeder der Formhohlräume mit einer Zusammensetzung gefüllt wird und die Form bei einem Zusammenfügen einen verbindenden freien Raum über den Formhohlräumen aufweist, der Zugang zu allen diesen Hohlräumen ergibt, und wobei die Menge der Zusammensetzungen ausreichend ist, um jeden der Formhohlräume und den verbindenen freien Raum nach dem Zusammenfügen der Form zu füllen,

(ii) Zusammenbringen der oberen und unteren Teile der Form und ausreichendes Erwärmen der Siliconkautschukzusammensetzungen, um einen einheitlichen, gehärteten Gegenstand aus Siliconkautschuk zu bilden, und

(iii) Öffnen der Form und Entfernen der gehärteten Gegenstände daraus.

2. Verfahren nach Anspruch 1, dadurch gekennzeichnet, daß der Innenteil der Düse getrennte Kammern für jede Farbe der flüssigen Siliconkautschukzusammensetzung aufweist und jede Kammer in Verbindung mit einer Vielzahl von Auslaßdüsen steht, die mindestens einem Teil der Gesamtzahl aller der Formhohlräume entspricht.

3. Verfahren nach Anspruch 1, dadurch gekennzeichnet, daß die flüssigen Siliconkautschukzusammensetzungen gehärtet werden unter Verwendung einer Additionsreaktion oder einer durch ein organonisches Peroxid katalysierten Reaktion.

## Revendications

1. Un procédé pour la fabrication d'articles en caoutchouc de silicone consistant essentiellement en une multiplicité d'objets moulés différemment colorés réunis par une couche de caoutchouc de silicone pour former un article d'une seule pièce, ledit procédé étant caractérisé per les opérations consistant, successivement,

(i) à remplir simultanément une multiplicité de cavités de moule dans la section inférieure d'un moule métallique ouvert avec une multiplicité de compositions de caoutchouc de silicone pompables différemment colorées délivrées par un injecteur, chaque cavité de moule étant remplie avec une même composition, ledit moule présentant à l'état assemblé un espace de raccordement au-dessus desdites cavités de moule qui donne accès à toutes lesdites cavités, et la quantité desdites compositions étant suffisante pour remplir chacune desdites cavités de moule et ledit espace de raccordement consécutivement à l'assemblage du moule;

(ii) à assembler les sections supérieure et inférieure dudit moule et à chauffer les compositions de caoutchouc de silicone suffisamment pour obtenir un article en caoutchouc de silicone durci formant une seule pièce; et

(iii) à désassembler le moule et à en extraire ledit article durci.

2. Un procédé selon la revendication 1 où la portion intérieure dudit injecteur contient des chambres distinctes pour chaque couleur de composition de caoutchouc de silicone liquide et chaque chambre est en communication avec une multiplicité de buses de sortie correspondant à au moins un fraction du nombre total desdites cavités de moule.

3. Un procédé selon la revendication 1 où lesdites compositions de caoutchouc de silicone liquide sont durcies par recours à une réaction d'addition ou à une réaction catalysée par un peroxyde organique.

# FIG. 1

# FIG. 2

# FIG. 3

# FIG. 4